(19) Europäisches Patentamt
European Patent Office
Office européen des brevets

(11) **EP 3 184 587 B1**

(12) **EUROPEAN PATENT SPECIFICATION**

(45) Date of publication and mention of the grant of the patent:
**18.03.2020 Bulletin 2020/12**

(51) Int Cl.:
***C08L 23/14*** *(2006.01)*

(21) Application number: **15201635.8**

(22) Date of filing: **21.12.2015**

(54) **EXTRUDED ARTICLES WITH IMPROVED OPTICAL PROPERTIES**

EXTRUDIERTE GEGENSTÄNDE MIT VERBESSERTEN OPTISCHEN EIGENSCHAFTEN

ARTICLES EXTRUDÉS AVEC DES PROPRIÉTÉS OPTIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2017 Bulletin 2017/26**

(73) Proprietor: **Borealis AG**
**1220 Vienna (AT)**

(72) Inventors:
 • **Wang, Jingbo**
 **4209 Engerwitzdorf (AT)**
 • **Gahleitner, Markus**
 **4501 Neuhofen/Krems (AT)**
 • **Klimke, Katja**
 **4021 Linz (AT)**
 • **Braun, Juliane**
 **4040 Linz (AT)**
 • **Leskinen, Pauli**
 **00700 Helsinki (FI)**

(74) Representative: **Lux, Berthold**
**Maiwald Patentanwalts- und Rechtsanwaltsgesellschaft mbH**
**Elisenhof**
**Elisenstraße 3**
**80335 München (DE)**

(56) References cited:
**WO-A1-2015/117948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to extruded articles comprising polypropylene homopolymer, that show improved optical properties such as low haze or low relative haze and good gloss, while maintaining good thermomechanical properties.

There are several application fields which require extruded articles like films or sheets exhibiting good optical properties in the sense of low haze or high gloss.

In the field of cast film production or in thermoforming application the films or sheets used need also to be dimensionally stable before and during heating and thermoforming. They also have to show low sagging and low shrink behaviour when heated up to the required conversion temperature.

**Description of the prior art:**

Polypropylene compositions are known in the art. The European patent application EP 1 514 893 A1 , for example, discloses polypropylene compositions comprising a clarifier selected from one or more phosphate-based $\alpha$-nucleating agents and/or polymeric nucleating agents, selected from the group consisting of vinylcycloalkane polymers and vinylalkane polymers. Similar nucleating agents are also disclosed in the international applications WO 99/24478 and WO 99/24479. The European patent application EP 0 316 187 A2 discloses a crystalline polypropylene homopolymer incorporated therein a polymer of a vinyl cycloalkane. The international application WO 2004/055101 discloses a heterophasic propylene copolymer containing nucleating agents selected from phosphate-derived nucleating agents, sorbitol-derived nucleating agents, metal salts of aromatic or aliphatic carboxylic acids, polymeric nucleating agents, such as polyvinyl cyclohexane and inorganic nucleating agents, such as talc.

EP1801155A1 refers to a polypropylene composition comprising a nucleated propylene homopolymer having improved optical properties, especially on injection moulded articles. However, the patent is silent on improving optical properties of films or sheets as well as thermomechanical properties at elevated temperatures or shrinkage.

All polypropylene compositions mentioned above are produced using a Ziegler-Natta catalyst, in particular a high yield Ziegler-Natta catalyst (so called fourth and fifth generation type to differentiate from low yield, so called second generation Ziegler-Natta catalysts), which comprises a catalyst component, a co-catalyst component and an internal donor based on phthalate-compositions.

However, some of such phthalate-compositions are under suspicion of generating negative health and environmental effects and will probably be banned in the future. Furthermore, there is an increasing demand on the market for "phthalate-free polypropylene" suitable for various applications, e.g. in the field of packaging, food and medical applications.

WO 2012007430 is one example of a limited number of patent applications, describing phthalate free catalysts based on citraconate as internal donor.

It is continuously desired to provide polymer material for extruded articles like films or sheets exhibiting good optical properties in the sense of low haze, low relative haze or high gloss.

At the same time other properties like thermomechanical properties must not be influenced but kept at well accepted high level.

It is also a continuous need to provide materials that can be converted into films or sheets which are dimensionally stable during heating and conversion and can be used in thermoforming applications. So it is required that these extruded articles show low sagging and low shrink behaviour when heated up to the required conversion temperature.

It is a further need to provide extruded articles with good optical properties, which can be used at elevated temperatures e.g. in the context of preparing food or sterilisable application that fulfil the standards on health and environmental requirements.

The person skilled in the art is well aware, that the principles for improving optical properties and thermomechanical behaviour follow opposite rules:

Generally speaking a high degree of crystallinity is beneficial for thermomechanical behaviour or dimensional stability, but also increases haze. So, the addition of nucleation agents may influence thermomechanical properties such as Heat Distortion Temperature (HDT) or shrinkage, but deteriorate optical properties. A higher amount of comonomer means more interruption of the isotactic polypropylene units and hence less crystallinity, but provides a product with better optical properties. However, thermomechanical properties can be reduced thereby. Hence the balance of optical and thermomechanical properties is of great importance. Therefore a general problem for articles comprising polypropylene homopolymers is to balance the conflicting requirements of optical and thermomechanical properties especially in view of continuously demanding requirements of health, environmental and/or legal provisions.

The present inventors have surprisingly identified a way how to improve optical properties of extruded articles while maintaining thermomechanical behaviour in the sense of HDT.

## Object of the invention

So the present invention relates to extruded articles showing improved optical properties in the sense of low haze, especially low relative haze, and good gloss and still provide good thermomechanical properties at elevated temperatures, hence show low shrinkage and maintain high heat distortion temperatures.

The present inventors have surprisingly identified an extruded article comprising a polypropylene homopolymer, wherein the polypropylene homopolymer is polymerised in the presence of a Ziegler-Natta catalyst and further characterised in that the polypropylene homopolymer

> a. has a MFR(230/2.16) according to ISO1133 in the range of 1 - 200 g/10 min,
> b. is free of phthalic acid esters as well as their respective decomposition products,
> c. comprises at least one $\alpha$-nucleating agent, and
> d. comprises 0 - 1.0 wt.% of ethylene and/or a C4-C10 $\alpha$-olefin, and
> e. the extruded article has a relative haze of 0.165 %/$\mu$m or below,

wherein the Ziegler-Natta-Catalyst comprises

> a. compounds of a transition metal of Group 4 to 6 of IUPAC,
> b. a Group 2 metal compound and
> c. an internal donor, wherein said internal donor is a non-phthalic compound, preferably is a non-phthalic acid ester
> d. a co-catalyst, and
> e. optionally an external donor.

In one embodiment the invention relates to final articles comprising the extruded articles of the present invention.

In a special embodiment the inventors also identified a method to improve optical properties like haze or relative haze in extruded articles.

In still another embodiment the invention relates to the use of such extruded articles in thermoforming or packaging, household, cooking or medical applications.

## Detailed description:

Within this application a film is understood to be characterised by a thickness in the range of 5 to < 300 $\mu$m and can be produced either by blown or cast film conversion processes.

Further, a sheet is understood to be characterised by a thickness in the range of 300 to 2000 $\mu$m and is preferably produced by casting, casting followed by roll-stack arrangement, or calendaring the polymer melt.

The polypropylene homopolymer according to the present invention relates to a polypropylene that consists substantially, i.e. of at least 99.0 wt.%, more preferably of at least 99.3 wt.%, still more preferably of at least 99.6 wt.%, like of at least 99.8 wt.% or at least 99.9 wt.%, of propylene units. In another embodiment only propylene units are detectable, i.e. only propylene has been polymerised.

The comonomer units other than propylene are selected from ethylene and C4 to C10 $\alpha$-olefins, like butene or hexene. Preferably, the comonomer is ethylene.

The total comonomer content of the nucleated propylene composition may be in the range of up to 1.0 wt.%, like up to 0.90 wt.%, 0.70 wt.%, such as up to 0.40 wt.%. The comonomer content is preferably in the range of 0.15 - 1.0 wt.%, such as 0.30 - 0.80 wt.%.

Alternatively preferred is a comonomer content of 0 - 0.40 wt.%, such as 0 - 0.25 wt.%. Further preferred is a comonomer content of > 0.40 - 0.90 wt.% like in the range of 0.50 - 0.75 wt.%.

In another preferred embodiment the polypropylene homopolymer according to the present invention consists of propylene as sole monomer.

The polypropylene homopolymer in accordance with the present invention may have a melt flow rate (MFR$_2$) as measured in accordance with ISO 1133 at 230 °C and 2.16 kg load in the range of 1 - 200 g/10min, like 1 to 100 g/10min, preferably in the range of 1.3 to 50 g/10min, like in the range of 1.5 to 30 g/10min. Even more preferably the MFR$_2$ is in the range of 1 - 20 g/10 min, such as 1.5 - 10 g/10 min.

The polypropylene homopolymer in accordance with the present invention may have Flexural Modulus according to ISO 178 of at least 1750 MPa or higher, such as 1780 MPa or 1800 MPa or higher.

The polypropylene homopolymer in accordance with the present invention may have a Charpy notched impact strength ISO179 1eA +23 °C (Charpy NIS+23) of 3.5 kJ/m$^2$ or higher, such as 4.2 kJ/m$^2$ or higher or 4.7 kJ/m$^2$ or higher.

The modality with respect to molecular weight distribution and thus with respect to melt flow ratio is not critical.

Thus the polypropylene homopolymer in accordance with the present invention may be unimodal or multimodal including bimodal with respect to molecular weight distribution.

**Nucleating agents**

The at least one α-nucleating agent according the present invention may be selected from the group consisting of:

(i) salts of monocarboxylic acids and polycarboxylic acids, e.g. sodium benzoate or aluminum tert-butylbenzoate; calcium salt of hexahydrophthalic acid;
(ii) soluble nucleating agents, like sorbitol derivatives, e.g. di(alkylbenzylidene)sorbitols as 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene]nonitol, and benzenetrisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein 1,3:2,4-di(4-methylbenzylidene) sorbitol and N-[3,5-bis-(2,2-dimethyl-propionylamino)-phenyl]-2,2-dimethyl-propionamide are equally preferred,
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and hydroxybis (2,4,8,10-tetra-tert- butyl-6-hydroxy-12Hdibenzo(d,g)(1,3,2) dioxaphosphocin 6-oxidato) aluminium, wherein hydroxybis (2,4,8,10-tetra-tert-butyl-6-hydroxy-12H-dibenzo(d,g)(1,3,2) dioxaphosphocin 6-oxidato) aluminium is preferred; and
(iv) polymeric nucleating agents, such as polymerised vinyl compounds, in particular vinyl cycloalkanes, like vinyl cyclohexane (VCH), poly(vinyl cyclohexane) (PVCH), vinylcyclopentane, and vinyl-2-methyl cyclohexane, 3-methyl-1-butene, 3-ethyl-1-hexene, 3-methyl-1-pentene, 4-methyl-1-pentene or mixtures thereof. PVCH is particularly preferred.

It is especially preferred that the nucleating agent comprised in the polypropylene homopolymer composition of the present invention is selected from the group of salts of monocarboxylic acids and polycarboxylic acids (i) or from the group of polymeric nucleating agents (iv) of above list. It is further preferred, that the nucleating agent comprised in the polypropylene homopolymer composition of the present invention is selected from the group of polymeric nucleating agents (iv).

In a further embodiment the polypropylene homopolymer of the current invention comprises two or more α-nucleating agents. These α-nucleating agents are preferably selected from the group of salts of monocarboxylic acids and polycarboxylic acids (i) for one nucleating agent and from the group of polymeric nucleating agents (iv) of above list for the other nucleating agent.

**Polymeric nucleating agent**

Polymeric nucleating agents from group (iv) can either be incorporated by in-reactor nucleation or by the so called Masterbatch technology (compounding technology) as mentioned below.

In a preferred embodiment of the present invention, the polymeric nucleating agent is introduced into the polypropylene homopolymer by means of a suitably modified catalyst, into the reactor (i.e. **in-reactor nucleation)** i.e. the catalyst to be used in catalysing the polymerisation of any of the fractions a) or b), preferably a) is subjected to a polymerisation of a suitable monomer for the polymeric nucleating agent to produce first said polymeric nucleating agent. The catalyst is then introduced together with the obtained polymeric nucleating agent to the actual polymerisation step of the propylene polymer component(s).

In a particularly preferred embodiment of the present invention, the propylene polymer is prepared in the presence of such a modified catalyst to obtain said reactor made polypropylene homopolymer. With such modified catalyst, it is also possible to carry out the above-identified preferred polymerisation sequence for the preparation of in-situ blended multimodal, including bimodal, polypropylenes.

The polymeric nucleating agent introduced via in-reactor-nucleation usually is present in the final product in an amount of from at least 10 ppm, typically at least 13 ppm, (based on the weight of the polypropylene homopolymer). Preferably this agent is present in the polypropylene homopolymer in a range of from 10 to 1000 ppm, more preferably from 15 to 500 ppm, such as 20 to 100 ppm.

In case of applying in-reactor nucleation, the inventive composition comprises a propylene homopolymer received from a step of pre-polymerisation which is carried out before the polymerisation of the first fraction as defined above. More preferably, said fraction is a propylene homopolymer fraction.

The polymeric nucleating agent may also be present in the final product also in lower concentrations, like in an amount of from at least 0.5 ppm, typically at least 1.0 ppm, (based on the weight of the polypropylene homopolymer). Preferably this agent is present in the α-nucleated polypropylene homopolymer in a range of 2 to 100 ppm, more preferably from 3 to 80 ppm, such as 5 to 50 ppm.

Another embodiment, different to the above mentioned in-reactor blend, is a mechanical blend of a polymer with a nucleating agent, wherein the polymer is first produced in the absence of a polymeric nucleating agent and is then blended mechanically with the polymeric nucleating agent or with a small amount of nucleated polymer or with polymers, which already contain the polymeric nucleating agent (so-called **master batch technology)** in order to introduce the polymeric nucleating agent into the polymer mixture. The preparation of a reactor made polymer composition ensures the preparation of a homogenous mixture of the components, for example a homogenously distributed polymeric nucleating agent in the polypropylene homopolymer, even at high concentrations of polymer nucleating agent.

As outlined above, the **reactor made polymer** composition is a preferred embodiment of the present invention, although also mechanical blends prepared, for example, by using master batch technology are envisaged by the present invention.

**Preparation Process:**

The polypropylene homopolymer in accordance with the present invention may be prepared by any suitable process, including in particular blending processes such as mechanical blending including mixing and melt blending processes and any combinations thereof as well as in-situ blending during the polymerisation process of the propylene polymer component(s). These can be carried out by methods known to the skilled person, including batch processes and continuous processes.

In a further preferred embodiment of the present invention, the polymeric nucleating agent is introduced into the polypropylene composition by means of a suitably modified catalyst, i.e. the catalyst to be used in catalysing the polymerisation of the propylene polymer is subjected to a polymerisation of a suitable monomer for the polymeric nucleating agent to produce first said polymeric nucleating agent (so called BNT-technology is mentioned below). The catalyst is then introduced together with the obtained polymeric nucleating agent to the actual polymerisation step of the propylene polymer component(s).

In a particularly preferred embodiment of the present invention, the propylene polymer is prepared in the presence of such a modified catalyst to obtain said reactor made polypropylene composition. With such modified catalyst, it is also possible to carry out the above-identified preferred polymerisation sequence for the preparation of in-situ blended multimodal, including bimodal, polypropylenes.

In the pre-polymerisation reactor a polypropylene is produced. The pre-polymerisation is conducted in the presence of the Ziegler-Natta catalyst. According to this embodiment the Ziegler-Natta catalyst, the co-catalyst, and the external donor are all introduced to the pre-polymerisation step. However, this shall not exclude the option that at a later stage for instance further co-catalyst and/or external donor is added in the polymerisation process, for instance in the first reactor. In one embodiment the Ziegler-Natta catalyst, the co-catalyst, and the external donor are only added in the pre-polymerisation reactor.

The pre-polymerisation reaction is typically conducted at a temperature of 0 to 60 °C, preferably from 15 to 50 °C, and more preferably from 20 to 45 °C.

The pressure in the pre-polymerisation reactor is not critical but must be sufficiently high to maintain the reaction mixture in liquid phase. Thus, the pressure may be from 20 to 100 bar, for example 30 to 70 bar.

In a preferred embodiment, the pre-polymerisation is conducted as bulk slurry polymerisation in liquid propylene, i.e. the liquid phase mainly comprises propylene, with optionally inert components dissolved therein. Furthermore, according to the present invention, an ethylene feed can be employed during pre-polymerisation as mentioned above.

It is possible to add other components also to the pre-polymerisation stage. Thus, hydrogen may be added into the pre-polymerisation stage to control the molecular weight of the polypropylene as is known in the art. Further, antistatic additive may be used to prevent the particles from adhering to each other or to the walls of the reactor.

The precise control of the pre-polymerisation conditions and reaction parameters is within the skill of the art.

Due to the above defined process conditions in the pre-polymerisation, a mixture of the Ziegler-Natta catalyst and the polypropylene produced in the pre-polymerisation reactor (PR) is obtained. Preferably the Ziegler-Natta catalyst is (finely) dispersed in the polypropylene. In other words, the Ziegler-Natta catalyst particles introduced in the pre-polymerisation reactor (PR) split into smaller fragments which are evenly distributed within the growing polypropylene. The sizes of the introduced Ziegler-Natta catalyst particles as well as of the obtained fragments are not of essential relevance for the instant invention and within the skilled knowledge.

**Polymerisation Process**

Accordingly, the nucleated polypropylene is preferably produced in a process comprising the following steps under the conditions set out above:

a) In the pre-polymerisation, a mixture of the Ziegler-Natta catalyst and the polypropylene produced in the pre-polymerisation reactor is obtained. Preferably the Ziegler-Natta catalyst is (finely) dispersed in the polypropylene. Subsequent to the pre-polymerisation, the mixture of the Ziegler-Natta catalyst and the polypropylene produced in the pre-polymerisation reactor is transferred to the first reactor. Typically the total amount of the polypropylene (coming from the prepolymerisation) in the final propylene polymer is rather low and typically not more than 5.0 wt.%, more preferably not more than 4.0 wt.%, still more preferably in the range of 0.5 to 4.0 wt.%, like in the range 1.0 of to 3.0 wt.%.

b) In the first polymerisation reactor, i.e. in a loop reactor, propylene is polymerised obtaining a first propylene homopolymer fraction of the propylene homopolymer, transferring said first propylene homopolymer fraction to any optional further polymerisation reactors.

In any further optional reactor propylene is polymerised in the presence of any precedingly produced polypropylene fraction

Within the invention it is envisaged, that comonomers may be applied.in any of the polymerisation reactors.

A preferred multistage process is a "loop-gas phase"-process, such as developed by Borealis A/S, Denmark (known as BORSTAR® technology) is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Within the term "polypropylene homopolymer composition" in the meaning of the present inventions, it is understood, that the composition still may comprise the usual additives for utilization with polyolefins, such as pigments (e.g. TiO2 or carbon black), stabilisers, acid scavengers and/or UV-stabilisers, lubricants, antistatic agents, further nucleating agents and utilization agents (such as processing aid agents, adhesive promotors, compatibilizer, etc.) The amount of such additives usually is 10 wt.% or less, preferably 5 wt.% or less.

## Catalyst system

A possible catalyst for being used in the production of the polypropylene homopolymer is described herein: The catalyst is a solid Ziegler-Natta catalyst (ZN-C), which comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail below. Thus, the catalyst is in a preferred embodiment fully free of undesired phthalic compounds. Further, the solid catalyst is free of any external support material, like silica or $MgCl_2$, but the catalyst is self-supported.

The Ziegler-Natta catalyst can be further defined by the way as obtained. Accordingly, the Ziegler-Natta catalyst is preferably obtained by a process comprising the steps of a)

$a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$) providing a solution of Group 2 alkoxide of formula $M(OR_1)_n(OR_2)_m X_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m $\neq$ 0, $0 < n' \leq 2$ and $0 < m' \leq 2$; and

b) adding said solution from step a) to at least one compound (TC) of a transition metal of Group 4 to 6 and

c) obtaining the solid catalyst component particles,

and adding an internal non-phthalic electron donor (ID) at any step prior to step c).

The internal donor (ID) or precursor thereof is thus added preferably to the solution of step a) or to the transition metal compound before adding the solution of step a).

According to the procedure above the Ziegler-Natta catalyst (ZN-C) can be obtained via precipitation method or via emulsion- solidification method depending on the physical conditions, especially temperature used in steps b) and c). Emulsion is also called in this application liquid/liquid two-phase system.

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range of 70 to 100 °C, to secure full precipitation of the catalyst component in form of a solid particles (step c).

In emulsion - solidification method in step b) the solution of step a) is typically added to the at least one transition metal compound (TC) at a lower temperature, such as from -10 to below 50 °C, preferably from -5 to 30 °C. During agitation of the emulsion the temperature is typically kept at -10 to below 40 °C, preferably from -5 to 30 °C. Droplets of the dispersed phase of the emulsion form the active catalyst composition. Solidification (step c) of the droplets is suitably carried out by heating the emulsion to a temperature of 70 to 150 °C, preferably to 80 to 110 °C. The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx), especially the solution of $a_2$).

Preferably the Group 2 metal (MC) is magnesium.

The magnesium alkoxy compounds as defined above can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_2$-$C_{16}$ alkyl residue, preferably $C_4$ to $C_{10}$, more preferably C6 to $C_8$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, most preferably 4.1 to 1:4.

Magnesium alkoxy compound may be a reaction product of alcohol(s), as defined above, and a magnesium compound selected from dialkyl magnesium, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used.Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesium are used. Most preferred dialkyl magnesium are butyl octyl magnesium or butyl ethyl magnesium.

It is also possible that magnesium compound can react in addition to the alcohol (A) and alcohol (B) also with a polyhydric alcohol (C) of formula R" $(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesium, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylene, pentane, hexane, heptane, octane and nonane. Hexanes and pentanes are particular preferred.

The reaction for the preparation of the magnesium alkoxy compound may be carried out at a temperature of 40 ° to 70 °C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilisers, like surfactants, which are used in a manner known in the art for facilitating the formation of and/or stabilise the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane and or with $TiCl_4$ Washing solutions can also contain donors and/or compounds of Group 13, like trialkyl aluminum, halogenated alky aluminum compounds or alkoxy aluminum compounds. Aluminum compounds can also be added during the catalyst synthesis. The catalyst can further be dried, as by evaporation or flushing with nitrogen or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt.%, Mg 10 to 20 wt-% and donor 10 to 40 wt.% of the catalyst composition.

Detailed description of preparation of catalysts is disclosed in WO 2012/007430, EP2610271, EP 2610270 and EP2610272.

The Ziegler-Natta catalyst (ZN-C) is preferably used in association with an alkyl aluminum cocatalyst and optionally external donors.

As further component in the instant polymerisation process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor).

In addition to the Ziegler-Natta catalyst (ZN-C) and the optional external donor (ED) a co-catalyst is used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as AlH$_3$, of less than 1.0 wt.% with respect to the triethyl aluminium (TEAL). More preferably, the hydride content is less than 0.5 wt.%, and most preferably the hydride content is less than 0.1 wt.%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly, the mole ratio of co-catalyst (Co) to external donor (ED) [Co/ED] must be in the range of 5 to 45, preferably is in the range of 5 to 35, more preferably is in the range of 5 to 25; and optionally the mole ratio of co-catalyst (Co) to titanium compound (TC) [Co/TC] must be in the range of above 80 to 500, preferably is in the range of 100 to 350, still more preferably is in the range of 120 to 300.

As mentioned above the Ziegler-Natta catalyst (ZN-C) is preferably modified by the so-called BNT-technology during the above described pre-polymerisation step in order to introduce the polymeric nucleating agent.

Such a polymeric nucleating agent is as described above a vinyl polymer, such as a vinyl polymer derived from monomers of the formula.

$$CH_2 = CH-CHR_1R_2$$

wherein $R_1$ and $R_2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably $R_1$ and $R_2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The weight ratio of vinyl compound to polymerisation catalyst in the modification step of the polymerisation catalyst preferably is 0.3 or more up to 40, such as 0.4 to 20 or more preferably 0.5 to 15, like 0.5 to 2.0.

The polymerisation of the vinyl compound, e. g. VCH, can be done in any inert fluid that does not dissolve the polymer formed (e. g. polyVCH). It is important to make sure that the viscosity of the final catalyst/polymerised vinyl compound/inert fluid mixture is sufficiently high to prevent the catalyst particles from settling during storage and transport.

The adjustment of the viscosity of the mixture can be done either before or after the polymerisation of the vinyl compound. It is, e. g., possible to carry out the polymerisation in a low viscosity oil and after the polymerisation of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained.

The weight ratio between the oil and the solid or highly viscous polymer is preferably less than 5: 1.

In addition to viscous substances, liquid hydrocarbons, such as isobutane, propane, pentane and hexane, can also be used as a medium in the modification step..

The polypropylenes produced with a catalyst modified with polymerised vinyl compounds contain essentially no free (unreacted) vinyl compounds. This means that the vinyl compounds shall be completely reacted in the catalyst modification step. To that end, the weight ratio of the (added) vinyl compound to the catalyst should be in the range of 0.05 to 10, preferably less than 3, more preferably about 0.1 to 2.0, and in particular about 0.1 to 1.5. It should be noted that no benefits are achieved by using vinyl compounds in excess.

Further, the reaction time of the catalyst modification by polymerisation of a vinyl compound should be sufficient to allow for complete reaction of the vinyl monomer, i. e. the polymerisation is continued until the amount of unreacted vinyl compounds in the reaction mixture (including the polymerisation medium and the reactants) is less than 0.5 wt-%, in particular less than 2000 ppm by weight (shown by analysis). Thus, when the prepolymerised catalyst contains a maximum of about 0.1 wt-% vinyl compound, the final vinyl compound content in the polypropylene will be below the limit of determination using the GC-MS method (< 0.01 ppm by weight). Generally, when operating on an industrial scale, a polymerisation time of at least 30 minutes is required, preferably the polymerisation time is at least I hour and in particular at least 5 hours. Polymerisation times even in the range of 6 to 50 hours can be used. The modification can be done at temperatures of 10 to 70 °C, preferably 35 to 65 °C.

According to the invention, nucleated high-stiffness propylene polymers are obtained when the modification of the catalyst is carried out in the presence of strongly coordinating external donors.

General conditions for the modification of the catalyst are also disclosed in WO 00/6831, with respect to the modification of the polymerisation catalyst.

The preferred embodiments as described previously in the present application with respect to the vinyl compound also apply with respect to the polymerisation catalyst of the present invention and the preferred polypropylene composition in accordance with the present invention. Suitable media for the modification step include, in addition to oils, also aliphatic inert organic solvents with low viscosity, such as pentane and heptane. Furthermore, small amounts of hydrogen can be used during the modification.

Extruded Articles and Final Articles:

Within this application a film is understood to be characterised by a thickness in the range of 5 to <300 μm and can be produced both by blown or cast film conversion processes.

Further, a sheet is understood to be characterised by a thickness in the range of 300 to 2000 μm and is preferably produced by casting, casting followed by roll-stack arrangement, or calendaring the polymer melt.

The extruded articles encompassed by the present invention comprise mono- or multilayer films, as well as mono-or multilayer sheets.

The films can be produce by any known conversion technology, such as blown film extrusion or cast film extrusion, wherein both are equally preferred.

In case of multilayer films or sheets it is within the scope of the invention, that the polypropylene homopolymer may be comprised by any of the layer or by several layers of a multilayer film or sheet.

The films may have a thickness of 5 to <300 μm, preferably 10 - 250 μm, such as 20 - 200 μm. Especially preferred are films with thicknesses of 25 - 80 μm, such as 30 - 120 μm.

Sheets according to the present invention may have a thickness in the range of up 300 to 2000 μm, preferably 400 to 1800 μm, such as 500 to 1700 μm.

The extruded articles of the current invention may have a haze value, determined according to ASTM1003 on 300 μm sheets of 12.0% or below, such as 11.2% or below, like 10.5% or 9.7 or 9.0 % or below.

Alternatively the extruded articles of the current invention may have a haze value, determined according to ASTM1003 on 50 μm cast films of 8.3 % or below, such as 7.9% or 7.5% or below.

The extruded articles of the current invention are characterised by a low relative haze value, i.e. haze in relation to the thickness of the sample, expressed in %/μm.

The extruded articles may have a relative haze value of 0.165 %/μm or below, such as 0.155 %/μm or below.

Especially preferred are relative haze values of 0.120 %/μm or below, such as 0.090 %/μm.

Especially preferred are extruded articles characterised by a comonomer content of 0 - 0.40 wt.%, and a relative haze of 0.165 %/μm or below, such as 0.155 %/μm or below. Equally preferred are extruded articles characterised by thickness of 200 μm of below and a relative haze of 0.165 %/μm or below, such as 0.155 %/μm or below.

Alternatively preferred are extruded articles characterised by a comonomer content of >0.40 - 0.90 wt.% and a relative haze of 0.040 %/μm or below, such as 0.035 %/μm or below, like 0.030 %/μm or below.

Equally preferred are extruded articles characterised by a thickness of 300 μm or above and a relative haze of 0.040 %/μm or below, such as 0.035 %/μm or below, like 0.030 %/μm or below.

The extruded articles of the current invention may have a gloss-in value (determined according to ASTM D2457 on the chill roll side of the sheet) of at least 122.5 %.

The extruded articles of the current invention may have a gloss-out value (determined according to ASTM D2457 on the air side of the sheet) of at least 124 %.

Especially preferred are extruded articles characterised by a comonomer content of >0.40 - 0.90 wt.% and a gloss-in value of at least 122.5 % or a gloss-out value of at least 124 %.

Gloss was determined according to ASTM D2457 (ISO 2813) at an angle of 20°.

Gloss-in defines measurements done on the chill roll side of the cast film.

Gloss-out defines measurements done on the air side of the cast film.

Extruded articles of the current invention are further characterised by a specific shrinkage behaviour (determined similar to ISO11501 as laid out further below), i.e. especially low shrinkage at high temperatures.

The extruded articles may have a shrinkage determined at 165 °C of (-10.0)% or higher, such as (-5.0)%, (-3.0 %).

It is further preferred, that the article have a shrinkage at 165 °C of 5.0 % or lower, such as 3.0 % or lower, or 1.5% especially 0 % or lower.

It is alternatively preferred, that the extruded articles have a shrinkage of 0 ± 7.5% or 0 ± 5.0%, such as 0 ± 3.0%

Preferred are extruded articles characterised by a comonomer content of >0.40 - 0.90 wt.% and a shrinkage determined at 165 °C of (-10.0)% or higher, such as (-5.0 %), (-3.0 %) or higher.

The extruded articles are further characterized by showing a total penetration energy per mm ($W_{break}$ [J/mm]) determined according to Dynatest ISO7725-2 of at least 1.9 J/mm or higher, such as 2.2 or 2.4 J/mm or higher.

Final articles comprising the extruded article of the present invention may be bags, pouches, container or part of containers, lids, sacks, trays, beakers, blisters and blister packs, etc.

Final articles comprising the extruded article of the present invention may further be packaging articles, household articles, e.g. for storing or cooking purposes (e.g. sous-vide-cooking, boil-in-bag, microwave cooking).

Final articles comprising the extruded article of the present invention may further be medical articles or packaging articles for medical articles, such as articles or packagings for (steam) sterilising applications.

Further encompassed by the present invention is the use of the extruded article in packaging, household, cooking, storing or medical applications, such as sterilising applications.

The method for producing the extruded articles with improved optical properties according to the present invention comprises the steps of

a) polymerising propylene and optionally ethylene and/or a C4-C10 α-olefin in the presence of a Ziegler-Natta catalyst, wherein the Ziegler-Natta-catalyst comprises

i) compounds of a transition metal of Group 4 to 6 of IUPAC,
ii) a Group 2 metal compound (MC) and
iii) an internal donor (ID), wherein said internal donor (ID) is a non-phthalic compound, preferably is a non-phthalic acid ester,
iv) a co-catalyst (Co), and
v) optionally an external donor (ED)

b) incorporating at least one α-nucleating agent and
c) extruding articles comprising said polymer obtained in step a) and b).

The α-nucleating agent incorporating in step b) is preferably a polymeric nucleating agent and/or a mono- or poly-carboxylic acid nucleating agent.

The present invention will now be described in further detail by the examples provided below:

**Measuring methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg for polypropylenes.

**Xylene Soluble Fraction and Amorphous Phase**

The xylene soluble fraction (XCS) as defined and described in the present invention is determined as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XCS\% = (100 \times m_1 \times v_0)/(m_0 \times v_1),$$

wherein $m_0$ designates the initial polymer amount (grams), $m_1$ defines the weight of residue (grams), $v_0$ defines the initial volume (millilitre) and $v_1$ defines the volume of the analysed sample (millilitre).

The fraction insoluble in p-xylene at 25 °C (XCU) is then equal to 100% - XCS%.

The solution from the second 100 ml flask was treated with 200 ml of acetone under vigorous stirring. The precipitate was filtered and dried in a vacuum oven at 90 °C. This solution can be employed in order to determine the amorphous part (AM) of the polymer (wt%) using the following equation:

$$AM = (100 \times m_1 \times v_0)/(m_0 \times v_1)$$

wherein $m_0$ designates the initial polymer amount (g), $m_1$ defines the weight of residue (g), vo defines the initial volume (ml) and $v_1$ defines the volume of the analysed sample (ml).

**DSC analysis, melting temperature (Tm) crystallization temperature (Tc)**

DSC parameters are measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature and heat of crystallization (Hc) are determined from the cooling step, while melting temperature and heat of fusion (Hf) are determined from the second heating step.

**Tensile Modulus and elongation at break**

Film TD (transversal direction) and MD (machine direction)

Tensile moduli in machine and transverse direction were determined acc. to ISO 527-3 on films with a thickness of 50 $\mu$m or sheets with a thickness of 300 $\mu$m at a cross head speed of 100 mm/min.

**Flexural Modulus**

The Flexural Modulus is determined in 3-point-bending according to ISO 178 on injection molded specimens of 80 x 10 x 4 mm$^3$ prepared in accordance with EN ISO 1873-2.
**Charpy impact test:** The Charpy notched impact strength (NIS) was measured according to ISO 179 1eA at +23 °C, using injection molded bar test specimens of 80x10x4 mm$^3$ prepared in accordance with EN ISO 1873-2.

**Heat deflection temperature (HDT)**

HDT is measured on injection moulded test specimen (80 x 10 x 4 mm$^3$) as produced according to EN ISO 1873-2, that are placed in a heating bath, resting horizontally on two supports according to ISO 75B. A constant load (0.45 MPa) is applied in the centre of the specimen (three-point bending) and the bath temperature is raised at a constant rate. The temperature of the bath at which the flexural deflection of the loading point has reached a predefined level is the heat deflection temperature of the material.

**Dyna test**

The impact strength of films is determined by the Dynatest method according to ISO7725-2 at 0 °C on cast films of 50 $\mu$m thickness produced on a monolayer cast film line with a melt temperature of 220 °C and a chill roll temperature of 20 °C with a thickness of 50 $\mu$m. The value "W$_{break}$" [J/mm] represents the relative total penetration energy per mm thickness that a film can absorb before it breaks divided by the film thickness. The higher this value the tougher the material.

**Gloss and haze**

Gloss was determined according to ISO 2813 (ASTM D2457) at an angle of 20°
Gloss-in defines measurements done on the chill roll side of the cast film.
Gloss-out defines measurements done on the air side of the cast film
Haze was determined according ASTM D1003 (haze and clarity) on sheets or films with a thickness of 300 and 50 $\mu$m respectively.

**Relative haze**

Relative haze defines haze determined according to ASTM D1003 in relation to the thickness of the sample, expressed in %/$\mu$m.
Relative Haze (rHaze) is determined by dividing haze [%] by thickness [$\mu$m]:

$$rHaze = \frac{haze\ [\%]}{film\ thickness\ [\mu m]}$$

**Shrinkage**

Shrinkage on films or sheets was measured according to ISO11501 on samples sized 100 * 100 mm$^2$ for 30 minutes at the indicated temperature (160 °C or 165 °C).
The samples of the current invention were test with modifications in the following points:

The film samples were put on a talcum bed approximately 5 mm depth; talcum was used for dusting the samples, too.

The measurement of the temperature was done in vicinity to the samples.

Shrinkage is determined according to the formula given below, wherein

L defines the length after heating,
$L_0$ defines the original length and
$\Delta L$ defines the shrinkage:

$$\Delta L = \frac{L - L_0}{L_0}$$

$\Delta L$ can be positive or negative. A negative value corresponds to shrinkage and a positive value to elongation of the film or sheet.

**Comonomer content quantification of poly(propylene-co-ethylene)copolymers**

Quantitative 13C{1 H} NMR spectra were recorded in the solution-state using a Bruker Advance III 400 NMR spectrometer operating at 400.15 and 100.62 MHz for 1H and 13C respectively. All spectra were recorded using a 13C optimised 10 mm extended temperature probe head at 125 °C using nitrogen gas for all pneumatics. Approximately 200 mg of material was dissolved in 3 ml of *1,2*-tetrachloroethane-*d*2 (TCE-*d*2) along with chromium-(III)-acetylacetonate (Cr(acac)3) resulting in a 65 mM solution of relaxation agent in solvent {8}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme{3, 4}. A total of 6144 (6k) transients were acquired per spectra.

Quantitative 13C{1H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the 13C{1H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by of the number of sites used to determine the absolute ethylene content to:

$$E = 0.5( S\beta\beta + S\beta\gamma + S\beta\delta + 0.5( S\alpha\beta + S\alpha\gamma ))$$

Through the use of this set of sites the corresponding integral equation becomes:

$$E = 0.5( I_H + I_G + 0.5( I_C + I_D ))$$

using the same notation used in the article of Wang et al. {6}. Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E \ [wt\%] = 100 * ( fE * 28.06 ) / ( (fE * 28.06) + ((1-fE) * 42.08) )$$

**Material description:**

**Polymer:**

1a) Catalyst preparation

3,4 litre of 2-ethylhexanol and 810 ml of propylene glycol butyl monoether (in a molar ratio 4/1) were added to a 20 l reactor. Then 7,8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

19,5 ml titanium tetrachloride was placed in a 300 ml reactor equipped with a mechanical stirrer at 25 °C. Mixing speed was adjusted to 170 rpm. 26,0 of Mg-complex prepared above was added within 30 minutes keeping the temperature at 25 °C . 3,0 ml of Viscoplex 1-254 and 1,0 ml of a toluene solution with 2 mg Necadd 447 was added. Then 24,0 ml of heptane was added to form an emulsion. Mixing was continued for 30 minutes at 25 °C. Then the reactor temperature was raised to 90 °C within 30 minutes. The reaction mixture was stirred for further 30 minutes at 90 °C. Afterwards stirring was stopped and the reaction mixture was allowed to settle for 15 minutes at 90 °C.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor
Wash 2: Washing was made with a mixture of 30 ml of TiCl4 and 1 ml of donor.
Wash 3: Washing was made with 100 ml toluene.
Wash 4: Washing was made with 60 ml of heptane.
Wash 5. Washing was made with 60 ml of heptane under 10 minutes stirring.

Afterwards stirring was stopped and the reaction mixture was allowed to settle for 10 minutes decreasing the temperature to 70 °C with subsequent siphoning, and followed by $N_2$ sparging for 20 minutes to yield an air sensitive powder.

1b) VCH modification of the catalyst

35 ml of mineral oil (Paraffinum Liquidum PL68) was added to a 125 ml stainless steel reactor followed by 0,82 g of triethyl aluminium (TEAL) and 0,33 g of dicyclopentyl dimethoxy silane (donor D) under inert conditions at room temperature. After 10 minutes 5,0 g of the catalyst prepared in 1a (Ti content 1,4 wt.%) was added and after additionally 20 minutes 5,0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

For polymerisation the catalyst prepared according to the method of example 1a was modified with VCH in the same way as is described in example 1b, only on a bigger scale. (Ti content of 3.0 wt.%). 41 liters of oil, 1.79 kg of TEAL, 0.79 kg of donor D, 5.5 kg of catalyst and 5.55 kg of VCH was used. The concentration of unreacted VCH in the oil/catalyst mixture after the reaction was 150 ppm weight.

All the inventive and comparative example were produced in a Borstar pilot plant with a prepolymerisation reactor, one slurry loop reactor and two gas phase reactors.

The solid catalyst was used in all cases along with triethyl-aluminium (TEAL) as cocatalyst and dicyclo pentyl dimethoxy silane (D-donor) as donor. The aluminium to donor ratio was 5 mol/mol, the TEAL/Ti-ratio was 90 mol/mol.

Polymerisation conditions are indicated in table 1.

All products were stabilised by melt mixing on a co-rotating twin-screw extruder at 200 - 230 °C with 0.2 wt.% of Irganox B225 and 0.1 wt.% calcium stearate.

IE1 is a nucleated, polypropylene homopolymer comprising 0.6 wt.% of ethylene, MFR 230/2.16 of 3.1 g/10 min, polymerised in the presence of a catalyst as disclosed according to the catalyst preparation of step 1a and 1b and 1250 ppm HPN20E (calcium salt of hexahydrophthalic acid), distributed by Milliken.

IE2 is a nucleated polypropylene homopolymer, MFR 230/2.16 of 8.0 g/10 min, polymerised in the presence of a catalyst as disclosed according to the catalyst preparation of step 1a and 1b. CE1 is a nucleated polypropylene homopolymer comprising 0.9 wt.% of ethylene, MFR 230/2.16 of 3.0 g/10 min, polymerised in the presence of a Ziegler-Natta-Catalyst and an internal donor comprising DEHP (di-ethyl-hexyl-phthalate). It is nucleated with polymeric nucleating agent as described in the catalyst preparation of step 1b above and 1250 ppm HPN20.

CE2 is a nucleated polypropylene homopolymer, MFR 230/2.16 of 8.0 g/10 min, polymerised in the presence of a Ziegler-Natta-Catalyst and an internal donor comprising DEHP (di-ethyl-hexyl-phthalate). It is nucleated with polymeric nucleating agents as described in the catalyst preparation of step 1b above.

**Film production:**

Films were produced on a Barmag CAST-Coex pilot line, equipped with an extruder 60 mm diameter L/D ratio: 30, a coat hanger die with a die width of 800 mm, die gap: 0.5 mm.

The 300 $\mu$m sheets were produced in roll stack settings, output 60 kg/h, line speed 5.5 m/min. The melt temperature was 239 °C; the temperature of the Cast roll was 24 °C, temperature of 1st roll (upstream to extruder) 22 °C, temperature of 2nd roll (downstream to winder) 28 °C.

The 50 $\mu$m films were produced on the same line as above, cast mode, output 60 kg/h, line speed 30 m/min, melt temperature was 239 °C.

Roll settings: 1st roll: diameter 400 mm and 15 °C; 2nd roll: diameter 250 mm and 25 °C. Electric pinning via electrostatic charging was applied.

**Table 1 Polymerisation Details of inventive examples**

|  |  | IE1 | IE2 |
|---|---|---|---|
| **Prepolymerisation** |  |  |  |
| Temperature | °C | 20 | 30 |
| TEAL | g/t C3 | 170 | 170 |
| Donor | g/t C3 | 20 | 40 |
| Ethylene feed | kg/h | 0,33 | 0,08 |
| Residence time | h | 0,37 | 0,38 |
| Donor type |  | D | D |
| **Loop** |  |  |  |
| Temperature | °C | 80 | 80 |
| H2/C3 | mol/kmol | 0,5 | 0,2 |
| C2/C3 | mol/kmol | 1,4 | 0,4 |
| Split | wt.% | 43 | 50 |
| Residence time | h | 0,58 | 0,37 |
| MFR2 | g/10min | 2,9 | 0,6 |
| XCS | wt.% | 3,2 | 2,7 |
| **GPR** |  |  |  |
| Temperature | °C | 80 | 80 |
| Pressure | kPa | 2200 | 2200 |
| Bed level | cm | 119 | 91 |
| H2/C3 | mol/kmol | 9,1 | 79,8 |
| C2/C3 | mol/kmol | 0,5 | 0,0 |
| Residence time | h | 1,6 | 1,9 |
| Split | wt.% | 57 | 50 |
| XCS | wt.% | 3,1 | 1,7 |
| MFR2 | g/10min | **3,6** | **7,7** |

**Table 2 Physical characterisation on 300 μm Sheets**

|  |  | CE1 | IE1 |
|---|---|---|---|
| MFR(230/2.16) | g/10min | 2.9 | 3.6 |
| C2 total (NMR) | wt.% | 0.9 | 0.6 |
| XCS | wt.% |  | 3:01 |
| Tc | °C | 126.3 | 127.1 |
| Tm1 | °C | 164.4 | 165 |
| Hm1 | J/g | 111.2 | 101 |
| Charpy NIS @23 °C | kJ/m$^2$ | 3.1 | 5.0 |
| Flexural modulus | MPa | 1724 | 1812 |
| HDT ISO75B | °C | 107 | 107 |
| **300μm sheet** |  |  |  |
| Haze | % | 13.3 | 8.8 |
| Relative haze (rHaze) | %/μm | 0.044 | 0.029 |
| gloss-in 20° | % | 121.9 | 123.8 |
| gloss-out 20° | % | 123.4 | 125.1 |
| Tensile modulus/TD | MPa | 1369 | 1394 |
| Elongation at break/TD | % | 504 | 568 |
| Tensile modulus/MD | MPa | 1256 | 1327 |
| Elongation at break/MD | % | 145 | 108 |
| Shrinkage 160 °C, 30min-MD | % | -0.9 | -0.5 |
| Shrinkage 160 °C, 30min-TD | % | -0.8 | -0.7 |
| Shrinkage 165 °C, 30min-MD | % | -20.5 | -2.2 |
| Shrinkage 165 °C, 30min-TD | % | +3.2 | -1 |

**Table 3: Physical characterisation on Cast film**

| 50 μm Cast film |  | CE2 | IE2 |
|---|---|---|---|
| C2-content | wt.% | 0 | 0 |
| MFR230/2.16 | g/10min | 6.5 | 7.7 |
| Tensile Modulus /TD | MPa | 1188 | 1000 |
| Tensile Modulus /MD | MPa | 1143 | 981 |
| Dyna. @23 °C | J/mm | 1.8 | 2.5 |
| Haze | % | 8.6 | 7.2 |
| Relative Haze (rHaze) | %/μm | 0.172 | 0.144 |
| HDT ISO 75B | °C | 119 | 119 |

**Claims**

1. Extruded article comprising a polypropylene homopolymer, wherein the polypropylene homopolymer is polymerised in the presence of a Ziegler-Natta catalyst and further **characterised in that** the polypropylene homopolymer

   a. has a MFR230/2.16 according to IS01133 in the range of 1 - 200 g/10 min,
   b. is free of phthalic acid esters as well as their respective decomposition products,
   c. comprises at least one α-nucleating agent,
   d. comprises 0 - 1.0 wt.% of ethylene and/or a C4-C10 α-olefin, and
   e. the extruded article has a relative haze of 0.165 %/μm or below,

wherein the Ziegler-Natta-Catalyst comprises

    a. compounds of a transition metal of Group 4 to 6 of IUPAC,
    b. a Group 2 metal compound and
    c. an internal donor, wherein said internal donor is a non-phthalic compound, preferably is a non-phthalic acid ester
    d. a co-catalyst, and
    e. optionally an external donor.

2. Extruded article according to claim 1, wherein the at least one $\alpha$-nucleating agent is a polymeric nucleating agent and/or a mono- or poly-carboxylic acid nucleating agent.

3. Extruded article according to claim 1 or 2 wherein the polypropylene homopolymer comprises 0 - 0.40 wt.% of ethylene and/or a C4-C10 $\alpha$-olefin.

4. Extruded article according to claim 3, further **characterised by** a haze according to ASTM 1003 of $\leq 8.3$ % when measured on 50 $\mu$m cast film.

5. Extruded article according to claim 3, further characterised that polypropylene homopolymer comprises a polymeric nucleating agent.

6. Extruded article according to claim 1 or 2 wherein the polypropylene homopolymer comprises > 0.40 - 0.90 wt.% of ethylene and/or a C4-C10 $\alpha$-olefin.

7. Extruded article according to any of claim 1 to 2 or 6 further **characterized by**

    a. a relative haze of 0.120 %/$\mu$m or below or
    b. a shrinkage determined at 165 °C of (-10)% or higher or
    c. a gloss-in according to ISO2813 of at least 122.5%.

8. Extruded article according to claim 7, further characterised that polypropylene homopolymer comprises a mono-or poly-carboxylic acid nucleating agent.

9. Extruded article according to claim 6, further **characterised by** a haze of $\leq 12.0$ % when measured on a 300 $\mu$m sheet.

10. Extruded article according to any preceding claim, wherein the extruded article has a wall thickness of 2000 $\mu$m or below.

11. Extruded article according to any preceding claim, wherein the article is a blown film, a cast film, a sheet or a layer of a multilayer film or multilayer sheet.

12. Final articles comprising the extruded article according to any of the preceding claims.

13. Method for producing an extruded article according to any one of claims 1 to 11 with improved optical properties like haze or relative haze, comprising the steps of

    a. polymerising propylene and optionally ethylene in the presence of a Ziegler-Natta catalyst, wherein the Ziegler-Natta-catalyst comprises

        i. compounds of a transition metal of Group 4 to 6 of IUPAC,
        ii. a Group 2 metal compound (MC) and
        iii. an internal donor (ID), wherein said internal donor (ID) is a non-phthalic compound, preferably is a non-phthalic acid ester
        iv. a co-catalyst (Co), and
        v. optionally an external donor (ED)

    b. incorporating at least one $\alpha$-nucleating agent
    c. extruding articles comprising said polymer obtained in step a) to b).

**14.** Use of the extruded article according to any of the preceding claims in packaging, household, cooking, medical applications or in thermoforming applications.

**Patentansprüche**

**1.** Extrudierter Gegenstand, umfassend ein Polypropylen-Homopolymer, wobei das Polypropylen-Homopolymer in Gegenwart eines Ziegler-Natta-Katalysators polymerisiert wird, und weiter **dadurch gekennzeichnet, dass** das Polypropylen-Homopolymer

a. eine MFR230/2,16 gemäß ISO1133 im Bereich von 1 - 200 g/10 min aufweist,
b. frei von Phthalsäureestern sowie deren entsprechenden Zersetzungsprodukten ist,
c. mindestens ein $\alpha$-Nukleierungsmittel umfasst,
d. 0-1,0 Gew.-% Ethylen und/oder ein C4-C10-$\alpha$-Olefin umfasst und
e. der extrudierte Gegenstand eine relative Trübung von 0,165 %/$\mu$m oder darunter aufweist,

wobei der Ziegler-Natta-Katalysator umfasst

a. Verbindungen eines Übergangsmetalls der Gruppe 4 bis 6 der IUPAC,
b. eine Metallverbindung der Gruppe 2 und
c. einen inneren Donor, wobei der innere Donor eine Nicht-Phthalsäure-Verbindung ist, vorzugsweise ein Nicht-Phthalsäureester ist,
d. einen Co-Katalysator und
e. gegebenenfalls einen äußeren Donor.

**2.** Extrudierter Gegenstand nach Anspruch 1, wobei das mindestens eine $\alpha$-Nukleierungsmittel ein polymeres Nukleierungsmittel und/oder ein Mono- oder Polycarbonsäure-Nukleierungsmittel ist.

**3.** Extrudierter Gegenstand nach Anspruch 1 oder 2, wobei das Polypropylen-Homopolymer 0 - 0,40 Gew.-% Ethylen und/oder ein C4-C10-$\alpha$-Olefin umfasst.

**4.** Extrudierter Gegenstand nach Anspruch 3, weiter **gekennzeichnet durch** eine Trübung gemäß ASTM 1003 von $\leq$ 8,3 %, wenn an einer 50 $\mu$m Gießfolie gemessen.

**5.** Extrudierter Gegenstand nach Anspruch 3, weiter **dadurch gekennzeichnet, dass** das Polypropylen-Homopolymer ein polymeres Nukleierungsmittel umfasst.

**6.** Extrudierter Gegenstand nach Anspruch 1 oder 2, wobei das Polypropylen-Homopolymer > 0,40 - 0,90 Gew.-% Ethylen und/oder ein C4-C10-$\alpha$-Olefin umfasst.

**7.** Extrudierter Gegenstand nach einem von Anspruch 1 bis 2 oder 6, weiter **gekennzeichnet durch**

a. eine relative Trübung von 0,120 %/$\mu$m oder darunter oder
b. eine bei 165°C bestimmte Schrumpfung von (-10) % oder mehr oder
c. einen Glanz gemäß ISO2813 von mindestens 122,5 %.

**8.** Extrudierter Gegenstand nach Anspruch 7, weiter **dadurch gekennzeichnet, dass** das Polypropylen-Homopolymer ein Mono- oder Polycarbonsäure-Nukleierungsmittel umfasst.

**9.** Extrudierter Gegenstand nach Anspruch 6, weiter **gekennzeichnet durch** eine Trübung von $\leq$ 12,0 %, wenn an einer 300 $\mu$m Folie gemessen.

**10.** Extrudierter Gegenstand nach einem vorangehenden Anspruch, wobei der extrudierte Gegenstand eine Wanddicke von 2000 $\mu$m oder darunter aufweist.

**11.** Extrudierter Gegenstand nach einem vorangehenden Anspruch, wobei der Gegenstand eine Blasfolie, eine Gießfolie, eine Platte oder eine Schicht einer Mehrschichtfolie oder Mehrschichtplatte ist.

**12.** Fertige Gegenstände, umfassend den extrudierten Gegenstand nach einem der vorangehenden Ansprüche.

**13.** Verfahren zur Herstellung eines extrudierten Gegenstands nach einem der Ansprüche 1 bis 11 mit verbesserten optischen Eigenschaften, wie Trübung oder relativer Trübung, umfassend die Schritte von

    a. Polymerisieren von Propylen und gegebenenfalls Ethylen in Gegenwart eines Ziegler-Natta-Katalysators, wobei der Ziegler-Natta-Katalysator umfasst

        i. Verbindungen eines Übergangsmetalls der Gruppe 4 bis 6 der IUPAC,
        ii. eine Metallverbindung der Gruppe 2 (MC) und
        iii. einen inneren Donor (ID), wobei der innere Donor (ID) eine Nicht-Phthalsäure-Verbindung ist, vorzugsweise ein Nicht-Phthalsäureester ist,
        iv. einen Co-Katalysator (Co) und
        v. gegebenenfalls einen äußeren Donor (ED)

    b. Einbau mindestens eines α-Nukleierungsmittels,
    c. Extrudieren von Gegenständen, umfassend das in Schritt a) bis b) erhaltene Polymer.

**14.** Verwendung des extrudierten Gegenstands nach einem der vorangehenden Ansprüche in Verpackungs-, Haushalts-, Koch-, in medizinischen Anwendungen oder in Thermoform-Anwendungen.

## Revendications

**1.** Article extrudé comprenant un homopolymère de polypropylène, dans lequel l'homopolymère de polypropylène est polymérisé en présence d'un catalyseur de Ziegler-Natta et en outre **caractérisé en ce que** l'homopolymère de polypropylène

    a. a un MFR230/2,16 conformément à la norme ISO 1133 dans la plage de 1 à 200 g/10 min,
    b. est exempt d'esters d'acide phtalique ainsi que de leurs produits de décomposition respectifs,
    c. comprend au moins un agent d'α-nucléation,
    d. comprend 0 à 1,0 % en poids d'éthylène et/ou d'une α-oléfine en C4 à C10, et
    e. l'article extrudé a un voile relatif de 0,165 %/μm ou moins,

dans lequel le catalyseur de Ziegler-Natta comprend

    a. des composés d'un métal de transition des Groupes 4 à 6 de l'IUPAC,
    b. un composé d'un métal du Groupe 2 et
    c. un donneur interne, dans lequel ledit donneur interne est un composé non phtalique, de préférence est un ester d'acide non phtalique
    d. un cocatalyseur, et
    e. optionnellement un donneur externe.

**2.** Article extrudé selon la revendication 1, dans lequel l'au moins un agent d'α-nucléation est un agent de nucléation polymérique et/ou un agent de nucléation de type acide mono- ou poly-carboxylique.

**3.** Article extrudé selon la revendication 1 ou 2, dans lequel l'homopolymère de polypropylène comprend 0 à 0,40 % en poids d'éthylène et/ou d'une α-oléfine en C4 à C10.

**4.** Article extrudé selon la revendication 3, **caractérisé en outre par** un voile conformément à la norme ASTM 1003 ≤ 8,3 % quand il est mesuré sur un film coulé de 50 μm.

**5.** Article extrudé selon la revendication 3, **caractérisé en outre en ce que** l'homopolymère de polypropylène comprend un agent de nucléation polymérique.

**6.** Article extrudé selon la revendication 1 ou 2, dans lequel l'homopolymère de polypropylène comprend de plus de 0,40 à 0,90 % en poids d'éthylène et/ou d'une α-oléfine en C4 à C10.

**7.** Article extrudé selon l'une quelconque des revendications 1, 2 et 6, **caractérisé en outre par**

    a. un voile relatif de 0,120 %/$\mu$m ou moins ou
    b. un retrait déterminé à 165°C de (-10) % ou plus ou
    c. un brillant conformément à la norme ISO 2813 d'au moins 122,5 %.

**8.** Article extrudé selon la revendication 7, **caractérisé en outre en ce que** l'homopolymère de polypropylène comprend un agent de nucléation de type acide mono- ou poly-carboxylique.

**9.** Article extrudé selon la revendication 6, **caractérisé en outre par** un voile $\leq$ 12,0 % quand il est mesuré sur une feuille de 300 $\mu$m.

**10.** Article extrudé selon l'une quelconque des revendications précédentes, dans lequel l'article extrudé a une épaisseur de paroi de 2000 $\mu$m ou moins.

**11.** Article extrudé selon l'une quelconque des revendications précédentes, dans lequel l'article est un film soufflé, un film coulé, une feuille ou une couche d'un film multicouche ou d'une feuille multicouche.

**12.** Articles finals comprenant l'article extrudé selon l'une quelconque des revendications précédentes.

**13.** Procédé pour produire un article extrudé selon l'une quelconque des revendications 1 à 11 ayant des propriétés optiques, telles que le voile ou le voile relatif, améliorées, comprenant les étapes de

    a. polymérisation de propylène et optionnellement d'éthylène en présence d'un catalyseur de Ziegler-Natta, dans lequel le catalyseur de Ziegler-Natta comprend

        i. des composés d'un métal de transition des Groupes 4 à 6 de l'IUPAC,
        ii. un composé d'un métal du Groupe 2 (MC) et
        iii. un donneur interne (ID), dans lequel ledit donneur interne (ID) est un composé non phtalique, de préférence est un ester d'acide non phtalique
        iv. un cocatalyseur, et
        v. optionnellement un donneur externe (ED)

    b. incorporation d'au moins un agent d'$\alpha$-nucléation
    c. extrusion d'articles comprenant ledit polymère obtenu dans les étapes a) à b).

**14.** Utilisation de l'article extrudé selon l'une quelconque des revendications précédentes dans des applications d'emballage, domestiques, médicales ou dans des applications de thermoformage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1514893 A1
- WO 9924478 A
- WO 9924479 A
- EP 0316187 A2
- WO 2004055101 A
- EP 1801155 A1
- WO 2012007430 A
- EP 0887379 A
- WO 9212182 A
- WO 2004000899 A
- WO 2004111095 A
- WO 0068315 A
- EP 2610271 A
- EP 2610270 A
- EP 2610272 A
- WO 006831 A